(19) Europäisches Patentamt
European Patent Office
Office européen des brevets

(11) **EP 4 576 250 A1**

(12) **EUROPEAN PATENT APPLICATION**
published in accordance with Art. 153(4) EPC

(43) Date of publication:
**25.06.2025 Bulletin 2025/26**

(21) Application number: **23886290.8**

(22) Date of filing: **01.11.2023**

(51) International Patent Classification (IPC):
*H01M 4/36* (2006.01)    *H01M 4/583* (2010.01)
*H01M 4/38* (2006.01)    *H01M 4/62* (2006.01)
*H01M 10/052* (2010.01)    *H01M 10/0562* (2010.01)

(52) Cooperative Patent Classification (CPC):
**H01M 4/36; H01M 4/38; H01M 4/583; H01M 4/62; H01M 10/052; H01M 10/0562**

(86) International application number:
**PCT/KR2023/017308**

(87) International publication number:
**WO 2024/096594 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 KR 20220144772**
**31.10.2023 KR 20230148468**

(71) Applicant: **LG Energy Solution, Ltd.**
**Seoul 07335 (KR)**

(72) Inventors:
• **KIM, Na Yoon**
**Daejeon 34122 (KR)**

• **HAN, Dakyung**
**Daejeon 34122 (KR)**
• **JUNG, Yi Jin**
**Daejeon 34122 (KR)**
• **LEE, Dong Chan**
**Daejeon 34122 (KR)**
• **CHOI, Ran**
**Daejeon 34122 (KR)**
• **KIM, Sulcham**
**Daejeon 34122 (KR)**
• **YOM, Jeeho**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ALL-SOLID-STATE LITHIUM-ION SECONDARY BATTERY**

(57)    The present invention provides an all-solid-state lithium-ion secondary battery comprising a positive electrode, a negative electrode, and a solid electrolyte interposed between the positive electrode and the negative electrode, wherein the negative electrode comprises a negative electrode current collector and a negative electrode active material layer, and wherein the negative electrode active material layer comprises a carbon material and Ag, and comprises two or more layers.

【Figure 1】

EP 4 576 250 A1

## Description

[Technical Field]

The present application claims the benefits of priorities based on Korean Patent Application No. 10-2022-0144772 filed on November 02, 2022 and Korean Patent Application No. 10-2023-0148468 filed on October 31, 2023, all the contents of which are incorporated herein by reference.

The present invention relates to an all-solid-state lithium-ion secondary battery.

[Background Art]

Recently, an all-solid-state secondary battery using a solid electrolyte as an electrolyte is attracting attention. In order to improve the energy density of such an all-solid-state secondary battery, it has been proposed to use lithium as a negative electrode active material. The capacity density (capacity per unit weight) of lithium is about 10 times the capacity density of graphite which is commonly used as a negative electrode active material. Therefore, if lithium is used as a negative electrode active material, it is possible to increase the output while thinning the all-solid-state secondary battery.

As an all-solid-state lithium-ion secondary battery, for example, it is known that a metal layer formed of a metal that forms an alloy with lithium is installed as a negative electrode active material layer, and an interfacial layer made of amorphous carbon is provided on the negative electrode active material layer. In the case of this type of all-solid-state lithium-ion secondary battery, when charging, metal lithium is precipitated between the amorphous carbon interface layer and the negative electrode active material layer, and when discharging, the corresponding metal lithium is ionized and moves toward the positive electrode.

However, when the all-solid-state lithium-ion secondary battery as described above is repeatedly charged and discharged, metal lithium precipitated between the amorphous carbon interface layer and the negative electrode active material layer may be ionized and dissolved, creating voids and thus making it unusable as a battery. Accordingly, when actually using this type of all-solid-state lithium-ion secondary battery, in order to prevent voids from forming voids due to charging and discharging, it is necessary to apply high external pressure by inserting end plates or the like on both sides of the positive electrode current collector and the negative electrode current collector. However, the presence of end plates that apply external pressure can be a barrier to thinning of the all-solid-state lithium-ion secondary battery.

Therefore, the development of an all-solid-state lithium-ion secondary battery that does not require high external pressure and has excellent discharge capacity is being actively conducted.

[Prior art document]

[Patent document]

Korean Laid-open Patent Publication No. 10-2015-0064697

[Disclosure]

[Technical Problem]

The present invention was devised to solve the above problems of the prior art, and it is an object of the present invention to provide an all-solid-state lithium-ion secondary battery that does not require applying high external pressure, suppresses the formation of dendrites and has excellent discharging capacity and lifetime characteristics.

[Technical Solution]

In order to achieve the above object, the present invention provides an all-solid-state lithium-ion secondary battery comprising

a positive electrode, a negative electrode, and a solid electrolyte interposed between the positive electrode and the negative electrode,
wherein the negative electrode comprises a negative electrode current collector and a negative electrode active material layer, and
the negative electrode active material layer comprises a carbon material and Ag, and comprises two or more layers.

[Advantageous Effects]

The all-solid-state lithium-ion secondary battery of the present invention does not require applying high external pressure, suppresses the formation of dendrites, and provides excellent discharging capacity and lifetime characteristics.

[Description of Drawings]

FIGS. 1 to 4 are cross-sectional views schematically showing the structure of the all-solid-state lithium-ion secondary battery of the present invention.
FIG. 5 is a graph showing the results of measured cycle characteristics of all-solid-state lithium-ion secondary batteries of Example 7 of the present invention and Comparative Example 2.
FIG. 6 shows an SEM image of the negative electrode of Example 6 of the present invention.
FIG. 7 is a graph showing the particle size distribution of the carbon material-metal composite of the present invention.

[Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible. Also, the terminology used herein is used only to describe exemplary embodiments, and is not intended to limit the present invention. The singular expression comprises the plural expression unless the context clearly dictates otherwise.

When it is mentioned that a certain component "is connected, provided, or installed" to another component, it should be understood that it may be directly connected or installed to another component, but other components may also exist in between. On the other hand, when it is mentioned that a certain component is "directly connected or installed" to another component, it should be understood that other component does not exist in between. Meanwhile, other expressions describing the relationship between the components, such as "on top" and "directly on top" or "between" and "immediately between" or "neighboring to" and "directly neighboring to", etc., should also be interpreted similarly.

As used herein, the term "combination" comprises mixtures, alloys, reaction products, and the like, unless specifically stated otherwise. As used herein, the terms "first", "second" and the like do not indicate order, quantity, or importance, but are used to distinguish one element from another element.

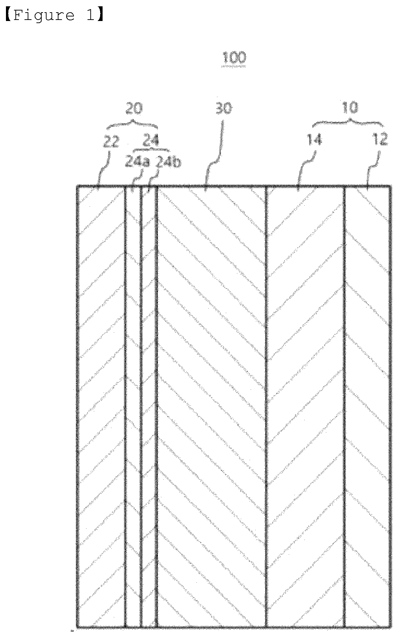

As illustrated in FIG. 1, the all-solid-state lithium-ion secondary battery 100 of the present invention comprises a positive electrode 10, a negative electrode 20, and a solid electrolyte 30 interposed between the positive electrode and the negative electrode,

wherein the negative electrode comprises a current collector 22 and a negative electrode active material layer 24, and the negative electrode active material layer 24 comprises a carbon material and Ag, and comprises two or more layers.

In one embodiment of the present invention, it is characterized in that the two or more layers comprise two layers containing the carbon material and Ag, and the two layers comprise different Ag contents.

In one embodiment of the present invention, among the two layers containing the carbon material and Ag, the layer disposed adjacent to the negative electrode current collector 22 (e.g., FIG. 1, 24a) may be characterized by a higher Ag content ratio than the layer disposed adjacent to the solid electrolyte 30 (e.g., FIG. 1, 24b). The all-solid-state battery with this structure can provide better discharging capacity and lifetime characteristics.

Specifically, the layer disposed adjacent to the negative electrode current collector may contain 1.5 to 10 times, preferably 2 to 8 times, 2 to 4 times, or 2 to 3 times more Ag than the layer disposed adjacent to the solid electrolyte.

The layer disposed adjacent to the negative electrode current collector may comprise 20 to 80% by weight, 20 to 60% by weight, or 25 to 55% by weight of Ag based on a total of 100% by weight of a negative electrode active material, and may comprise 20 to 80% by weight or 40 to 80% by weight of carbon material based on a total of 100% by weight of a negative electrode active material.

In addition, the negative electrode active material layer disposed adjacent to the negative electrode current collector may further comprise a binder. In this case, it may comprise 20 to 75% by weight of Ag, 20 to 75% by weight of the carbon material, and 1 to 10% by weight of the binder, and may also comprise 25 to 55% by weight of Ag, 40 to 73% by weight of the carbon material, and 1 to 10% by weight of the binder.

The layer disposed adjacent to the solid electrolyte may comprise 10 to 60% by weight, 15 to 40% by weight, or 15 to 30% by weight of Ag based on a total of 100% by weight of a negative electrode active material, and may comprise 40 to 90% by weight, 60 to 85% by weight, or 70 to 85% by weight of carbon material based on a total of 100% by weight of a negative electrode active material.

In addition, the negative electrode active material layer disposed adjacent to the solid electrolyte may further comprise a binder. In this case, it may comprise 10 to 55% by weight of Ag, 40 to 85% by weight of the carbon material, and 1 to 10% by weight of the binder, and may also comprise 15 to 30% by weight of Ag, 65 to 83% by weight of the carbon material, and 1 to 10% by weight of the binder.

In one embodiment of the present invention, the two layers comprising the carbon material and Ag may each independently have a thickness of $1\,\mu m$ to $50\,\mu m$.

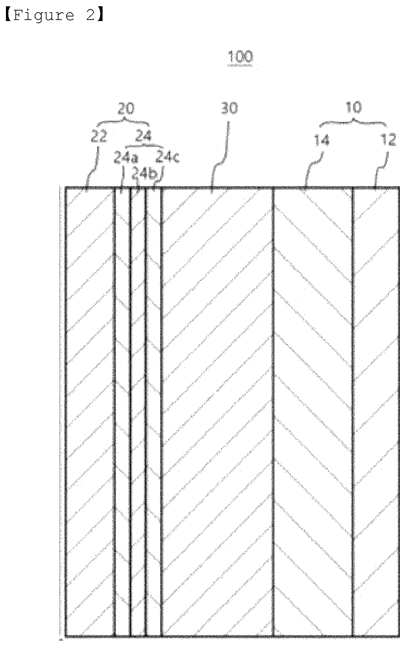

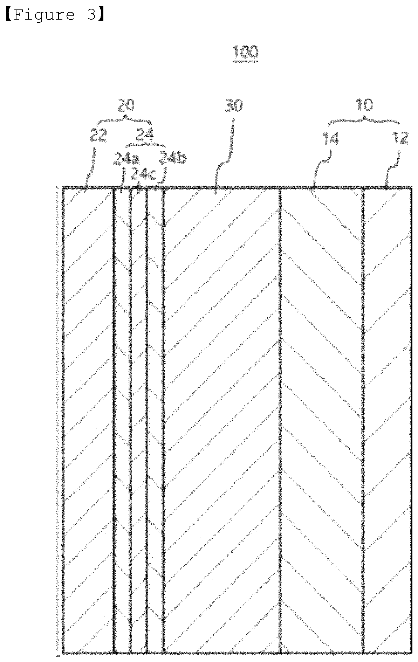

In one embodiment of the present invention, as illustrated in FIG. 2 or FIG. 3, the all-solid-state lithium-ion secondary battery of the present invention may further comprise a layer 24c containing 0 to 5% by weight, or 0 to 2% by weight of Ag based on a total of 100% by weight of a negative electrode active material, in addition to the two layers 24a and 24b containing the carbon material and Ag. The layer may further comprise 95 to 100% by weight or 98 to 100% by weight of carbon material. In addition, if the layer comprises the binder, it may comprise 0 to 5% by weight of Ag, 90 to 99% by weight of the carbon material, and 1 to 10% by weight of the binder, and may comprise 0 to 2% by weight of Ag, 90 to 99% by weight of the carbon material, and 1 to 10% by weight of the binder.

In one embodiment of the present invention, it may be preferable that the layer containing 0 to 5% by weight of Ag and carbon material is formed as a layer that does not contain Ag. In addition, the layer may further comprise a binder. In this case, it may comprise 90 to 99% by weight of the carbon material and 1 to 10% by weight of the binder.

In one embodiment of the present invention, as illustrated in FIG. 3, the layer 24c containing 0 to 5% by weight of Ag and carbon material is disposed between two layers 24a and 24b containing the carbon material and Ag, or as illustrated in FIG. 2, it may be disposed between the solid electrolyte adjacent layer 24b among the two layers and the solid electrolyte 30.

In one embodiment of the present invention, it may be preferable that the layer 24c containing 0 to 5% by weight of Ag and the carbon material is disposed between the layer 24b adjacent to the solid electrolyte among the two layers and the solid electrolyte 30, as illustrated in FIG. 2.

In one embodiment of the present invention, the layer 24c containing 0 to 5% by weight of Ag and the carbon material may have a thickness of $1\,\mu m$ to $30\,\mu m$.

In one embodiment of the present invention, the negative electrode active material layer of the present invention may further comprise a layer containing 80 to 100% by weight, 90 to 100% by weight, or 95 to 100% by weight of Ag based on a total of 100% by weight of a negative electrode active material, in addition to the two layers containing the carbon material and Ag. The layer may further comprise 0 to 20% by weight, 0 to 10% by weight, or 0 to 5% by weight of the carbon material. In addition, the layer may further comprise a binder. In this case, it may comprise 80 to 99% by weight of Ag, 0 to 19% by weight of the carbon material, and 1 to 10% by weight of the binder, may comprise 90 to 99% by weight of Ag, 0 to 9% by weight of the carbon material, and 1 to 10% by weight of the binder, and also may comprise 95 to 99% by weight of Ag, 0 to 4% by weight of the carbon material, and 1 to 10% by weight of the binder.

In one embodiment of the present invention, the layer containing 80 to 100% by weight of Ag may be disposed between the layer adjacent to the negative electrode current collector among the two layers and the negative electrode current collector.

In one embodiment of the present invention, the layer containing 80 to 100% by weight of Ag may have a thickness of $1\,\mu m$ to $30\,\mu m$.

In one embodiment of the present invention, the two or more layers may comprise one layer containing the carbon material and Ag, and one layer containing 0 to 5% by weight of Ag and the carbon material.

In this case, one layer containing the carbon material and Ag may be relatively located on the side of the current collector, and one layer containing 0 to 5% by weight of Ag and the carbon material may be relatively located on the side of the solid electrolyte. Here, one layer containing 0 to 5% by weight of Ag and the carbon material is the same as described above.

In one embodiment of the present invention, the carbon material particles contained in one or more layers of the negative electrode active material layer may be, for example, amorphous carbon material particles. However, the carbon material particles are not limited to the amorphous particles. Specific examples of the amorphous carbon material may be carbon black such as acetylene black, furnace black and Ketjen black, graphene, or a combination thereof.

If the amorphous carbon material particles contain pores, the size of the pores may be 1nm or less, preferably 0.5nm or less. However, it may be more preferable that the amorphous carbon material particles do not contain pores. This is because, if the amorphous carbon material particles contain pores, lithium may precipitate inside the pores, this lithium may be inactivated, and the amount of lithium thus inactivated may increase as charging and discharging are repeated.

The size of the pores in the amorphous carbon material particles can be measured, for example, through a nitrogen adsorption experiment or through a transmission electron microscope.

The carbon material particles may be carbon material particles containing 3 to 10 at% of oxygen. If oxygen is contained in the above-mentioned range, the surface roughness of the negative electrode active material layer can be significantly improved, which is desirable because the operating characteristics of the battery are also improved. In particular, in the case of the layer containing Ag, it is preferable to comprise the carbon material particles containing 3 to 10 at% of oxygen.

In one embodiment of the present invention, the oxygen may exist in a form contained in a functional group bonded to the carbon material particle. In addition, the functional group may comprise one or more selected from the group consisting of a carboxy group, a hydroxyl group, an ether group, an ester group, an aldehyde group, a carbonyl group, and an amide group.

The carbon material particle containing oxygen in an amount of 3 to 10 at% can be produced by, for example, a method of oxidizing the carbon material. Specifically, oxygen functional groups can be introduced into the surface of the carbon material by treating the carbon material with an acid and reacting it at a temperature of 25 °C to 60 °C while stirring it. The type of the acid is not particularly limited, and any acid capable of introducing an oxygen functional group to the surface of the carbon material may be used. The acid may comprise, for example, sulfuric acid, nitric acid, or a mixture thereof, and an oxidizing agent such as potassium permanganate may be used.

The content of oxygen contained in the carbon material may be measured using an optoelectronic spectrometer (XPS or ESCA). For example, the content of oxygen contained in the carbon material may be measured using a K-Alpha (Thermo Fisher Scientific) device.

In one embodiment of the present invention, the oxygen may be present on the surface of the carbon material particle. The surface does not mean only the outer surface of the carbon material particle, and comprises the surface of pores when the pores are present.

In one embodiment of the present invention, each negative electrode active material layer may further contain one or more particles selected from gold, platinum, palladium, silicon, aluminum, bismuth, tin, indium, and zinc, in addition to Ag particles.

In one embodiment of the present invention, the carbon material particles may have a particle size (D50) of 10nm to 100nm or 20nm to 60nm, and the Ag particles and other metal particles may have a particle size (D50) of 20nm to 100nm, 20nm to 60nm, or 30nm to 60nm.

In one embodiment of the present invention, one or more layers comprised in the negative electrode active material layer may contain 2 to 10 at% of oxygen. If oxygen is contained in the above-mentioned range, the surface roughness of the corresponding layer is significantly improved, which is desirable because the operating characteristics of the battery can be improved.

Among the layers comprised in the negative electrode active material layer, any one or more layers containing the carbon material and Ag may further comprise 65 to 85 at% of carbon and 0.5 to 5 at% of Ag along with the oxygen, and more preferably may further comprise 74 to 85 at% of carbon and 0.5 to 3 at% of Ag.

Any one or more among the layers described above may further comprise 5 to 25 at% of fluorine (F), and more preferably may further comprise 10 to 20 at% of fluorine (F).

Any one or more among the layers described above may further comprise 0.01 to 1 at% of sulfur (S), and more preferably may further comprise 0.01 to 0.5 at% of sulfur (S).

In one embodiment of the present invention, any one or more among the layers described above may comprise 2 to 10 at% of oxygen, 65 to 85 at% of carbon, 0.5 to 5 at% of Ag, and 5 to 25 at% of fluorine (F).

In addition, it may more preferably comprise 2.5 to 5 at% of oxygen, 74 to 85 at% of carbon, 0.5 to 3 at% of Ag, and 10 to 20 at% of fluorine (F).

Also, in addition to the above components, the sulfur (S) may be further comprised.

In the above, the atomic composition ratio can be measured using photoelectron spectroscopy (XPS or ESCA). For example, the component ratio can be measured using a Nexsa4 (Thermo Fisher Scientific) device.

In one embodiment of the present invention, any one or more among the layers described above comprised in the negative electrode active material layer may have the following surface roughness characteristics:

$$0.01 \mu m \leq Sa \leq 0.3 \mu m$$

$$0.5 \mu m \leq Sz \leq 5 \mu m$$

$$500 \ mm^{-1} \leq Spc \leq 1500 \ mm^{-1}$$

$$0.005 \leq Sdr \leq 0.15.$$

If the surface roughness satisfies the above range, overall characteristics of the battery may be improved and in particular, lifetime characteristics may be improved. Specifically, if the surface roughness of the negative electrode active material layer exceeds the above range, since the contact with the electrolyte layer is not made sufficiently in the direction toward the electrolyte and it is not helpful for uniform precipitation of lithium in the direction toward the negative electrode current collector, the characteristics of the battery may be deteriorated.

In the above, the surface roughness of the negative electrode active material layer may be measured using a microscope device. For example, the surface roughness may be measured using a 3D laser confocal microscope (manufactured by KEYENCE company) device.

In the above, Sa (arithmetic mean height of the profile) may be at most $0.3\mu$m or less, $0.2\mu$m or less, $0.1\mu$m or less, $0.08\mu$m or less, or $0.075\mu$m or less, and at least $0.01\mu$m or more, $0.02\mu$m or more, $0.03\mu$m or more, $0.04\mu$m or more, $0.05\mu$m or more, $0.06\mu$m or more, or $0.07\mu$m or more. In addition, the Sa may be more preferably in the range of $0.01\mu$m $\leq$ Sa $\leq 0.1\mu$m, but is not limited to these ranges, and may be set to a range of a combination of the maximum and minimum values. The Sa represents the average value of the absolute value of the height difference between each point with respect to the average surface of the surface.

In the above, the Sz (maximum height roughness of the profile) may be at most $5\mu$m or less, $4\mu$m or less, $3\mu$m or less, $2\mu$m or less, or $1.5\mu$m or less, and at least $0.5\mu$m or more, $0.8\mu$m or more, $1\mu$m or more, $1.1\mu$m or more, $1.2\mu$m or more, or $1.3\mu$m or more. In addition, the Sz may be more preferably in the range of $0.5\mu$m $\leq$ Sz $\leq 1.6\mu$m, but is not limited to these ranges, and may be set to a range of a combination of the maximum and minimum values. The Sz represents the maximum height roughness in a single plane, that is, the distance between the highest point and the lowest point in the single plane.

In the above, Spc (roughness by number of peaks) may be at most 1500 mm$^{-1}$ or less, 1400 mm$^{-1}$ or less, 1300 mm$^{-1}$ or less, 1200 mm$^{-1}$ or less, 1100 mm$^{-1}$ or less, or 1000 mm$^{-1}$ or less, and at least 500 mm$^{-1}$ or more, 600 mm$^{-1}$ or more, 700 mm$^{-1}$ or more, 800 mm$^{-1}$ or more, or 900 mm$^{-1}$ or more. In addition, Spc may be more preferably in the range of 500 mm$^{-1}$ $\leq$ Spc $\leq$ 1100 mm$^{-1}$, but is not limited to these ranges, and may be set to a range of a combination of the maximum and minimum values. The Spc is the roughness by the number of peaks, that is, a measure of the steepness of the peaks.

In the above, Sdr (degree of increase in the interfacial area) may be at most 0.15 or less, 0.1 or less, 0.05 or less, 0.03 or less, or 0.02 or less, and at least 0.005 or more, 0.01 or more, or 0.015 or more. In addition, Sdr may be more preferably in the range of 0.005 $\leq$ Sdr $\leq$ 0.03, but is not limited to these ranges, and may be set to a range of a combination of the maximum and minimum values. The Sdr means a degree of increase in the interfacial area, that is, an area ratio increased with respect to an area when the measurement area of the developed area (surface area of the measured shape) is viewed vertically.

In the above, the meanings of Sa, Sz, Spc, and Sdr are described, but they are used with the same meanings as commonly used in this field.

In one embodiment of the present invention, the carbon material particles and Ag particles contained in any one or more layers in the negative electrode active material layer may be contained in the form of a carbon material-metal composite.

In the present invention, the negative electrode active material layer is formed as a very thin film with a micro thickness, and may be manufactured in a form comprising a carbon material-Ag composite in which carbon material particles and Ag are combined. However, the conventional carbon material-Ag composite had a problem that it is difficult to uniformly distribute carbon material particles and Ag particles.

Furthermore, the conventional carbon material-Ag composite had a problem that it is very difficult to form a composite with a small particle size. That is, if the particle size of the carbon material-Ag composite is too large as compared to a thin film having a micro thickness, since it is difficult to form a negative electrode active material layer with excellent surface roughness and thus the operating characteristics of the battery are also reduced, it is very important to prepare a carbon material-Ag composite having a small particle size.

The present invention provides the effect of remarkably improving the above problems of the prior art.

That is, the carbon material-Ag composite forms a carbon material-Ag composite having a significantly smaller particle size compared to the case of using a conventional carbon material. The carbon material forming the composite contains 3 at% or more of the oxygen, and thus is well mixed with the metal particles and has a characteristic of being uniformly distributed with the Ag particles. Therefore, it is possible to prepare a carbon material-Ag composite with excellent component uniformity. In addition, for the above reasons, it is possible to prepare a carbon material-Ag composite having a small and uniform particle size.

In one embodiment of the present invention, the carbon material-Ag composite may be composed by one or more bonds selected from a chemical bond between the carbon material particle and the Ag particle, a van der Waals bond between the carbon material particle and the Ag particle, and a bond between the carbon material particle and the Ag particle by a binder. The chemical bond may be an Ag-O bond between the Ag particle and oxygen contained in the carbon material.

In one embodiment of the present invention, the carbon material particles having a particle size (D50) of 10nm to 100nm or 20nm to 60nm may be used, and the Ag particles having a particle size (D50) of 20nm to 100nm, 20nm to 60nm, or 30nm to 60nm may be used.

In one embodiment of the present invention, the carbon material-Ag composites may have a particle size (D50) of $0.1\mu$m to $0.5\mu$m. The upper limit of the particle size may be $0.4\mu$m or $0.3\mu$m.

In addition, the maximum particle size of the carbon material-Ag composite may be $3\mu$m or less, $2\mu$m or less, $1.5\mu$m or less, or $1\mu$m or less.

If the particle size of the carbon material-Ag composite is too large as compared to a thin film having a micro thickness, since it is difficult to form a negative electrode active material layer with excellent surface roughness and thus the operating characteristics of the battery are also reduced, it is very important to prepare a carbon material-Ag composite having a small particle size.

The reason that the operating characteristics of the battery is deteriorated is that if the surface roughness of the negative electrode active material layer is large, the contact with the electrolyte layer is not made sufficiently and it is not helpful for uniform precipitation of lithium toward the negative electrode current collector.

In an anode-less lithium-ion secondary battery, the thickness of the negative electrode active material layer may be typically formed in a range of $1\mu$m to $100\mu$m or $10\mu$m to $60\mu$m, and specifically may be $10\mu$m, $20\mu$m, $30\mu$m, $40\mu$m, $50\mu$m or the like.

For example, if a carbon material-Ag composite having a particle size of $10\mu$m is used to form a negative electrode active material layer having a thickness of $20\mu$m, it is obvious that it is difficult to form a desirable surface roughness.

If the maximum particle size of the carbon material-metal composite is $3\mu$m or less, it is preferable because the effect of improving the surface roughness can be obtained more reliably. On the other hand, when the maximum particle size exceeds $3\mu$m, it may be difficult to obtain excellent surface roughness when forming a thin film. Therefore, the maximum particle size of the carbon material-Ag composite may be $3\mu$m or less, $2\mu$m or less, $1.5\mu$m or less, and $1\mu$m or less.

The particle size of the carbon material-Ag composite may be measured using a particle size analyzer. For example, the particle size can be measured using a Mastersizer 3000 (Malvem panalytical) instrument.

In one embodiment of the present invention, the positive electrode may include a positive electrode current collector and a positive electrode active material layer.

In one embodiment of the present invention, the solid electrolyte may be a sulfide-based solid electrolyte.

Hereinafter, embodiments of the present invention are more specifically illustrated.

**<Configuration of all-solid-state lithium-ion secondary battery>**

FIG. 1 shows a cross-sectional view schematically showing a schematic configuration of the all-solid-state lithium-ion secondary battery according to an embodiment of the present invention.

The all-solid-state lithium-ion secondary battery 100 according to an embodiment of the present invention is a so-called lithium-ion secondary battery which conducts charging and discharging by moving lithium ions between the positive electrode 10 and the negative electrode 20. Specifically, this all-solid-state lithium-ion secondary battery 100 is composed of a positive electrode 10, a negative electrode 20, and a solid electrolyte layer 30 disposed between the positive electrode 10 and the negative electrode 20, as shown in FIG. 1.

(1) Positive electrode

As shown in FIG. 1, the positive electrode 10 comprises the positive electrode current collector 12 and the positive electrode active material layer 14 that are sequentially disposed toward the negative electrode 20.

The positive electrode current collector 12 may be in a plate shape or a foil shape. The positive electrode current collector 12 may be, for example, one type of metal selected from indium, copper, magnesium, stainless steel, titanium, iron, cobalt, nickel, zinc, aluminum, germanium, and lithium, or an alloy of two or more of these metals.

The positive electrode active material layer 14 can reversibly intercalate and de-intercalate lithium ions. The positive electrode active material layer 14 may comprise a positive electrode active material and a solid electrolyte.

The positive electrode active material may be a compound capable of intercalating/de-intercalating lithium. An example of the compound capable of intercalating/de-intercalating lithium may be one represented by any one of Formulas of $Li_aA_{1-b}B'_bD'_2$ (wherein, $0.90 \leq a \leq 1.8$, and $0 \leq b \leq 0.5$); $Li_aE_{1-b}B'_bO_{2-c}D'_c$ (wherein, $0.90 \leq a \leq 1.8$, $0 \leq b \leq 0.5$, $0 \leq c \leq 0.05$); $LiE_{2-b}B'_bO_{4-c}D'_c$ (wherein, $0 \leq b \leq 0.5$, $0 \leq c \leq 0.05$); $Li_aNi_{1-b-c}Co_bB'_cD'_\alpha$ (wherein, $0.90 \leq a \leq 1.8$, $0 \leq b \leq 0.5$, $0 \leq c \leq 0.05$, $0 < \alpha \leq 2$); $Li_aNi_{1-b-c}Co_bB'_cO_{2-\alpha}F'_\alpha$ (wherein, $0.90 \leq a \leq 1.8$, $0 \leq b \leq 0.5$, $0 \leq c \leq 0.05$, $0 < \alpha < 2$); $Li_aNi_{1-b-c}Mn_bB'_cD'_\alpha$ (wherein, $0.90 \leq a \leq 1.8$, $0 \leq b \leq 0.5$, $0 \leq c \leq 0.05$, $0 < \alpha \leq 2$); $Li_aNi_{1-b-c}Mn_bB'_cO_{2-\alpha}F'_\alpha$ (wherein, $0.90 \leq a \leq 1.8$, $0 \leq b \leq 0.5$, $0 \leq c \leq 0.05$, $0 < \alpha < 2$); $Li_aNi_bE_cG_dO_2$ (wherein, $0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ (wherein, $0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ (wherein, $0.90 \leq a \leq 1.8$, $0.001 \leq b \leq 0.1$); $Li_aCoG_bO_2$

(wherein,, $0.90 \leq a \leq 1.8$, $0.001 \leq b \leq 0.1$); $Li_aMnG_bO_2$(wherein, $0.90 \leq a \leq 1.8$, $0.001 \leq b \leq 0.1$); $Li_aMn_2G_bO_4$ (wherein, $0.90 \leq a \leq 1.8$, $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$($0 \leq f \leq 2$); $Li_{(3-f)}Fe_2(PO_4)_3$ ($0 \leq f \leq 2$); $LiFePO_4$.

In the above formula, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; J is V, Cr, Mn, Co, Ni, Cu, or a combination thereof.

Specific examples of the positive electrode active material may be lithium salts such as lithium cobaltate (hereinafter referred to as LCO), lithium of nickelate, lithium nickel cobaltate, lithium nickel cobalt aluminate (hereinafter referred to as NCA), and lithium nickel cobalt manganate (hereinafter referred to as NCM), lithium manganate and lithium iron phosphate, and lithium sulfide. The positive electrode active material layer 14 may comprise only one or also two or more selected from these compounds as a positive electrode active material.

The positive electrode active material may comprise a lithium salt of a transition metal oxide having a layered rock salt-type structure among the lithium salts described above. Here, the "layered rock salt-type structure" is a structure in which oxygen atomic layers and metal atomic layers are alternately and regularly arranged in the direction of the cubic rock salt-type structure, and as a result, each atomic layer forms a two-dimensional plane. In addition, the "cubic rock salt-type structure" means a sodium chloride-type structure which is one kind of crystal structure. For example, the "cubic rock salt-type structure" refers to a structure in which face-centered cubic lattices formed by each of the positive ions and the negative ions are displaced from each other by 1/2 of the edge of the unit lattice.

The lithium salt of a transition metal oxide having such a layered rock salt-type structure may be, for example, a ternary lithium transition metal oxide such as $LiNi_xCo_yAl_zO_2$ (NCA) or $LiNi_xCo_yMn_zO_2$ (NCM) (wherein, $0 < x < 1$, $0 < y < 1$, $0 < z < 1$, $x + y + z = 1$). The positive electrode active material layer 14 may improve energy density and thermal stability of the all-solid-state lithium-ion secondary battery 100 by comprising the lithium salt of the ternary transition metal oxide having such a layered rock salt-type structure as a positive electrode active material.

Here, the shape of the positive electrode active material may be, for example, a particle shape such as a true spherical shape or an elliptical spherical shape. In addition, the particle diameter of the positive electrode active material is not particularly limited, and may be within a range applicable to the positive electrode active material of a typical all-solid-state lithium-ion secondary battery. In addition, the content of the positive electrode active material in the positive electrode active material layer 14 is not also particularly limited, and is possible if it is within the range applicable to the positive electrode of a typical all-solid-state lithium-ion secondary battery.

Of course, one having a coating layer on the surface of the compounds may be used, or a mixture of the compounds and a compound having a coating layer may be also used. The coating layer may comprise a coating element compound of oxide or hydroxide of the coating element, oxyhydroxide of the coating element, oxycarbonate of the coating element, or hydroxycarbonate of the coating element. The compound constituting these coating layers may be amorphous or crystalline. The coating element contained in the coating layer may be Mg, Al, Co, K, Na, Ca, Si, Ti, V, Sn, Ge, Ga, B, As, Zr, or a mixture thereof. The coating layer forming process may use any coating method (e.g., spray coating, dipping, etc.), as long as it can be coated in a way that does not adversely affect the properties of the positive electrode active material by using these elements in the compound, and a detailed description thereof will be omitted since it can be well understood by those engaged in the art.

A specific example of the coating layer may be $Li_2O$-$ZrO_2$.

The solid electrolyte contained in the positive electrode active material layer 14 may also be the same as or different from the solid electrolyte contained in the solid electrolyte layer 30 to be described later.

In addition, the positive electrode active material layer 14 may be one obtained by appropriately mixing additives such as an electrically conductive agent, an adhesive agent (binder), a filler, a dispersant, or an ion conductive auxiliary agent, as well as the above-described positive electrode active material and solid electrolyte.

The electrically conductive agent may be, for example, graphite, carbon black, acetylene black, Ketjen black, carbon fiber, or metal powder. In addition, the adhesive agent (binder) may be, for example, styrene-butadiene rubber (SBR), polytetrafluoroethylene, polyvinylidene fluoride, or polyethylene. In addition, the filler, the dispersant, the ion conductive auxiliary agent or the like may be a known material typically used for an electrode of an all-solid-state lithium-ion secondary battery.

(2) Negative electrode

The negative electrode 20 may include a negative electrode current collector 22 and a negative electrode active material layer 24 sequentially disposed toward the positive electrode 10.

The negative electrode current collector 22 may be in a plate shape or a foil shape. The negative electrode current collector 22 may comprise a material that does not react with lithium, that is, does not form any one of alloy or a compound with lithium. The material constituting the negative electrode current collector 22 may be, for example, copper, stainless steel, titanium, iron, cobalt, nickel and the like. The negative electrode current collector 22 may be composed of one of these metals, or may be composed of an alloy or a clad (coating) material of two or more of these metals.

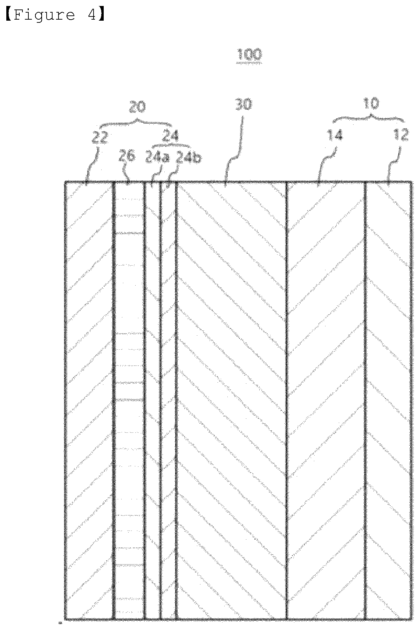

The negative electrode active material layer 24 may include one or two or more types of negative electrode active materials capable of forming an alloy or compound with lithium. In an initial state or a state after complete discharging, lithium may not be contained in the negative electrode current collector 22, in the negative electrode active material layer 24, or between the negative electrode active material layer 24 and the solid electrolyte layer 30. As will be described later, if the all-solid-state lithium-ion secondary battery 100 according to an embodiment is overcharged, the negative electrode active material contained in the negative electrode active material layer 24 and lithium ions that have moved from the positive electrode 10 form an alloy or a compound, and the metal layer 26 containing lithium as a main component may be formed (precipitated) on the negative electrode 20, as shown in FIG. 4. The metal layer 26 may be precipitated and disposed between the negative electrode current collector 22 and the negative electrode active material layer 24, in negative electrode active material layer 24 or both. The metal layer 26 containing lithium as a main component between the negative electrode current collector 22 and the negative electrode active material layer 24 may be disposed closer to the negative electrode current collector 22 than the negative electrode active material layer 24.

The negative electrode active material layer 24 according to an embodiment may comprise Ag as an essential negative electrode active material. Accordingly, the metal layer 26 formed during overcharging may include a Li(Ag) alloy including a $\gamma 1$ phase, a $\beta$Li phase, or a combination thereof in which Ag is solid-dissolved in lithium. Therefore, during discharging, only Li is dissolved in the Li(Ag) alloy constituting the metal layer 26 and solid-dissolved Ag is remained, thereby suppressing the occurrence of voids. In this case, the content of Ag in the precipitated Li-Ag solid solution may be 60% by weight or less. If the content is within such a range, it is possible to effectively suppress a decrease in the average discharging potential due to the influence of Ag. On the other hand, if the content of Ag in the precipitated Li-Ag solid solution is too small, the amount of Ag remaining during discharging is decreased, and the generation of voids may not be sufficiently suppressed. For this reason, the content of Ag in the precipitated Li-Ag solid solution may be 20% by weight or more, for example, 40% by weight or more.

The fact that the metal layer 26 contains at least one Li-Ag solid solution of the $\gamma_1$ phase or the $\beta$Li phase can be confirmed, for example, by analyzing the peak position and peak intensity ratio by XRD measurement. Also, the Ag content in the precipitated Li-Ag solid solution can be measured, for example, by XRD measurement. In this case, the diffraction peak position of pure metal lithium is different from that of metal lithium solid-dissolved in Ag (Li-Ag solid solution). The diffraction peak position of the metal lithium solid-dissolved in Ag approaches that of pure metal lithium as the solid solution concentration of Ag is decreased. For example, in XRD measurement using a Cu target, if the solid solution concentration of Ag is decreased, the diffraction peak moves from around $2\theta = 37.0°$ to around $36.5°$. The solid-dissolved amount of Ag can be estimated from this peak position. In addition, the solid-dissolved amount can be measured using ICP, etc.

In one embodiment, Ag is not necessarily present uniformly in the negative electrode active material layer 24, but may be localized on the side of the negative electrode current collector 22 in the negative electrode active material layer 24. In this case, lithium ions may react with the localized layer of Ag in the negative electrode active material layer 24, which reaches the vicinity of the negative electrode current collector 22, and thus a Li(Ag) alloy may be formed as the metal layer 26.

If the content of Ag contained in the negative electrode active material layer 24 is too small, since the Ag remaining during discharging is also reduced, the occurrence of voids may not be suppressed. For this reason, the negative electrode active material layer 24 contains Ag in an amount of 10% by weight or more, for example, 20% by weight or more, based on a total of 100% by weight of the negative electrode active material contained in the negative electrode active material layer, in the initial state without charging and discharging.

Meanwhile, the upper limit of the Ag content in the negative electrode active material contained in the negative electrode active material layer 24 may be 100% by weight. However, in the relationship between the reaction potential of Ag and Li, if Ag is increased, the average discharge potential may be decreased and thus the energy density of the battery may be also decreased. Therefore, from the viewpoint of high energy densification, the Ag content may be 80% by weight or less, for example, 50% by weight or less.

The Ag content (% by weight) in the negative electrode active material layer 24 can be measured, for example, as follows. That is, the all-solid-state lithium-ion secondary battery 100 is discharged, and then dismantled, and the negative electrode active material layer 24 is recovered from the surface of the negative electrode 20. Afterwards, the Ag content in the recovered product can be determined using EDX, XRF, or ICP. Also, for example, the Ag content can be determined from SEM-EDS analysis in the cross-sectional direction.

In addition, in the negative electrode active material layer 24, if the Ag content per unit area is too low when viewed from the stacking direction of the negative electrode 20, since the remaining Ag is also decreased during discharging, there is a risk that the generation of voids may not be suppressed. Accordingly, the Ag content per unit area in the negative electrode active material layer 24 may be 0.05 mg/cm$^2$ or more, for example, 0.10 mg/cm$^2$ or more.

Meanwhile, if the Ag content per unit area is too high, there is a risk that the average discharge potential will be decreased and thus the energy density of the battery will be decreased. Accordingly, the Ag content per unit area may be

5.0 mg/cm$^2$ or less, for example, 2.0 mg/cm$^2$ or less.

The Ag content per unit area of the negative electrode active material layer 24 can be measured, for example, as follows. That is, the all-solid-state lithium-ion secondary battery 100 is discharged, and then dismantled, and the Ag content can be determined from composition analysis by SEM-EDS on the surface or cross-sectional direction of the negative electrode 20. It is not limited to this, and the Ag content can be also determined using XPS, ICP, etc.

Also, in the initial state without charging and discharging, Ag contained in the negative electrode active material layer 24 may be in the form of particles or a film. When present in the form of particles, the average particle diameter (d50) (diameter length or average diameter) of Ag may be 20nm to 1$\mu$m, but is not limited thereto.

The negative electrode active material layer 24 may further comprise, for example, one or more selected from amorphous carbon, Au, Pt, Pd, Si, Al, Bi, Sn, In, and Zn as an optional negative electrode active material in addition to Ag.

The carbon material contained in the negative electrode active material layer 24 may preferably be amorphous carbon. Specific examples of the amorphous carbon may be carbon black such as acetylene black, furnace black and Ketjen black, graphene, or a combination thereof.

The sum of negative electrode active materials other than Ag may be 50 % by weight or more, for example 70 % by weight or more, based on a total of 100% by weight of the negative electrode active material contained in the negative electrode active material layer 24. The content of the negative electrode active material other than Ag can be measured in the same way as the content of Ag.

The negative electrode active material layer 24 may further comprise an adhesive agent (binder). The negative electrode active material layer 24 can be stabilized on the negative electrode current collector 22 by comprising an adhesive agent (binder). The material constituting the adhesive agent (binder) may be, for example, a resin material such as styrene-butadiene rubber (SBR), polytetrafluoroethylene, polyvinylidene fluoride, and polyethylene. The adhesive agent (binder) may be composed of one or more selected from these resin materials.

In addition, the negative electrode active material layer 24 may be in a state in which additives, for example, a filler, a dispersant, an ionically conductive agent, and the like used in conventional all-solid-state lithium-ion secondary batteries are suitably blended. Specific examples of the additive are the same as those described in the above-described positive electrode.

The total thickness of the negative electrode active material layer 24 is not particularly limited, but may be 1$\mu$m to 100$\mu$m, or 10$\mu$m to 60$\mu$m. If the thickness of the negative electrode active material layer 24 is less than 1$\mu$m, the performance of the all-solid-state secondary battery may not be sufficiently improved. If the thickness of the negative electrode active material layer 24 exceeds 100$\mu$m, since the resistance of the negative electrode active material layer 24 is high, as a result, the performance of the all-solid-state secondary battery may not be sufficiently improved. If the above-described binder is used, the thickness of the negative electrode active material layer 24 can be easily secured at an appropriate level.

On the other hand, a film containing a material capable of forming an alloy or a compound with lithium on the negative electrode current collector 22 is further comprised, and the film may be disposed between the negative electrode current collector 22 and the negative electrode active material layer.

The negative electrode current collector 22 does not react with lithium metal, but may make it difficult to precipitate a smooth lithium metal layer thereon. The film may also be used as a wetting layer to allow lithium metal to be flatly precipitated on the negative electrode current collector 22.

A material capable of forming an alloy with lithium metal used in the film may comprise silicon, magnesium, aluminum, lead, silver, tin, or a combination thereof. The materials capable of forming compounds with lithium metal used in the film may include carbon, titanium sulfide, iron sulfide, or a combination thereof. The content of the material used in the film may be small within a limit that does not affect the electrochemical properties of the electrode and/or the redox potential of the electrode. The film may be applied flatly on the negative electrode current collector 22 to prevent cracking during the charging cycle of the all-solid-state lithium-ion secondary battery 100. The film may be applied by a method such as physical vapor deposition such as evaporation or sputtering, chemical vapor deposition, or plating method.

The thickness of the film may be 1nm to 500nm. The thickness of the film may be, for example, 2nm to 400nm. The thickness of the film may be, for example, 3nm to 300nm. The thickness of the film may be, for example, 4nm to 200nm. The thickness of the film may be, for example, 5nm to 100nm.

(3) Solid electrolyte layer

The solid electrolyte layer 30 is disposed between the positive electrode 10 and the negative electrode 20 (e.g., between the positive electrode active material layer 14 and the negative electrode active material layer 24). The solid electrolyte layer 30 comprises a solid electrolyte capable of transporting ions. The solid electrolyte layer 30 may comprise a sulfide-based solid electrolyte.

The sulfide-based solid electrolyte may comprise $Li_2S-P_2S_5$, $Li_2S-P_2S_5$-LiX (X is a halogen element), $Li_2S$-$P_2S_5$-$Li_2O$, $Li_2S-P_2S_5$-$Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2$-$B_2S_3$-LiI, $Li_2S$-

$SiS_2$-$P_2S_5$-LiI, $Li_2S$-$B_2S_3$, $Li_2S$-$P_2S_5$-$Z_mS_n$(m and n are positive numbers, and Z is one of Ge, Zn, or Ga), $Li_2S$-$GeS_2$, $Li_2S$-$SiS_2$-$Li_3PO_4$, $Li_2S$-$SiS_2$-$Li_pMO_q$ (p and q are positive numbers, and M is one of P, Si, Ge, B, Al, Ga or In), or a combination thereof. The solid electrolyte may be composed of one material or two or more materials selected from these sulfide-based solid electrolyte materials.

The sulfide-based solid electrolyte may comprise a solid electrolyte represented by Formula 1 below:

$$<\text{Formula 1}> \quad Li_xM'_yPS_zA_w$$

wherein,

x, y, z, and w are each independently 0 or more and 6 or less;
M' is at least one of As, Ge, Ga, Sb, Si, Sn, Al, In, Ti, V, Nb, or Ta; and
A is at least one of F, Cl, Br, or I.

As a solid electrolyte, one containing sulfur (S), phosphorus (P), and lithium (Li) as constituent elements among the sulfide-based solid electrolyte materials may be used. For example, one containing $Li_2S$-$P_2S_5$ may be used. When using one containing $Li_2S$-$P_2S_5$ as the sulfide-based solid electrolyte material, the mixing molar ratio of $Li_2S$ and $P_2S_5$ may be selected, for example, in the range of $Li_2S$:$P_2S_5$ = 50:50 to 90:10.

Also, the solid electrolyte may be in an amorphous state or in a crystalline state. In addition, the solid electrolyte may be in a mixture of amorphous and crystalline forms.

The solid electrolyte layer 30 may further comprise an adhesive agent (binder). The adhesive agent (binder) material may be, for example, a resin such as styrene-butadiene rubber (SBR), polytetrafluoroethylene, polyvinylidene fluoride, polyethylene, or polyacrylic acid. The adhesive agent (binder) material may be the same as or different from the material constituting the adhesive agent (binder) in the positive electrode active material layer 14 and the negative electrode active material layer (24).

(4) Initial charging capacity ratio

In the all-solid-state lithium-ion secondary battery 100 according to one embodiment, the initial charging capacity of the positive electrode active material layer 14 is excessive relative to the initial charging capacity of the negative electrode active material layer 24. As will be described later, the all-solid-state lithium-ion secondary battery 100 according to one embodiment can be used after charging it beyond the initial charging capacity of the negative electrode active material layer 24 (i.e., overcharging). At the beginning of charging, lithium may be intercalated into the negative electrode active material layer 24. That is, the negative electrode active material can form an alloy or compound with lithium ions that have migrated from the positive electrode 10. When charging it beyond the initial charging capacity of the negative electrode active material layer 24, lithium may precipitate on the back of the negative electrode active material layer 24, that is, between the negative electrode current collector 22 and the negative electrode active material layer 24, and then the metal layer 26 may be formed by this lithium, as shown in FIG. 4. The metal layer 26 may be mainly composed of lithium in which Ag is solid-dissolved (i.e., Ag-Li solid solution). This phenomenon may consist of a negative electrode active material, for example a material that forms an alloy or compound with lithium. During discharging, the lithium in the negative electrode active material layer 24 and the metal layer 26 may be ionized and move to the positive electrode 10 while leaving the solid-dissolved Ag remaining. Therefore, lithium can be used as a negative electrode active material in the all-solid-state lithium-ion secondary battery 100. In addition, since the negative electrode active material layer 24 coats the metal layer 26, it can function as a protective layer for the metal layer 26 and at the same time suppress the precipitation and growth of dendritic metal lithium.

It is preferable that the all-solid-state lithium-ion secondary battery 100 according to one embodiment satisfies the ratio of the initial charging capacity of the positive electrode active material layer 14 to the initial charging capacity of the negative electrode active material layer 24, that is, the initial charging capacity ratio b/a of the following equation 100:

$$0.01 < b/a < 0.5 \qquad (100)$$

wherein a is the initial charging capacity (mAh) of the positive electrode active material layer 14, and b is the initial charging capacity (mAh) of the negative electrode active material layer 24.

If the initial charging capacity is less than 0.01, there is a risk that the characteristics of the all-solid-state lithium-ion secondary battery (100) may be deteriorated. The reason for this may be that the negative electrode active material layer 24 does not function sufficiently as a protective layer. For example, if the thickness of the negative electrode active material layer 24 is very thin, the capacity ratio may be 0.01 or less. In this case, there is a risk that the negative electrode active material layer 24 may be collapsed and dendritic metal lithium may precipitate and grow due to repeated charging and discharging. As a result, the characteristics of the all-solid-state lithium-ion secondary battery 100 may be deteriorated. Accordingly, the initial charging capacity may be 0.01 or more. Meanwhile, if the initial charging capacity is more than 0.5, the capacity of the battery may be decreased because the amount of lithium deposited on the negative electrode may be decreased. Therefore, the initial charging capacity may be less than 0.5.

(5) Constitution of all-solid-state lithium-ion secondary battery

The all-solid-state lithium-ion secondary battery 100 of the present invention is an all-solid-state lithium-ion secondary battery 100 including a positive electrode 10, a solid electrolyte layer 30, and a negative electrode 20 in this order. The negative electrode 20 comprises a negative electrode current collector 22 and a negative electrode active material layer 24, and the negative electrode active material layer 24 comprises a carbon material and Ag, and may comprise two or more layers.

The negative electrode current collector 22 may include a Ni foil, a Ni-coated Cu foil, a stainless-steel foil, or a combination thereof. The negative electrode current collector 22 may have a further improved discharge capacity.

**<Manufacturing method of all-solid-state lithium-ion secondary battery>**

Next, a method of manufacturing the all-solid-state lithium-ion secondary battery 100 will be described. The all-solid-state lithium-ion secondary battery 100 according to an embodiment can be obtained by manufacturing the positive electrode 10, the negative electrode 20, and the solid electrolyte layer 30, respectively, and then stacking the above layers.

(10) Positive electrode manufacturing process

The positive electrode manufacturing process is described as an example as follows. First, a material constituting the positive electrode active material layer 14 (a positive electrode active material, an adhesive agent (binder), etc.) is added to a non-polar solvent to prepare a slurry (or paste). Then, the obtained slurry is applied on the prepared positive electrode current collector 12, and dried to obtain a laminate. Next, the obtained laminate is pressurized using, for example, hydrostatic pressure to obtain a positive electrode 10. Also, the pressing process is omitted.

(20) Negative electrode manufacturing process

The negative electrode manufacturing process is described as an example as follows. First, a material constituting the negative electrode active material layer 24 (a negative electrode active material containing Ag, an adhesive agent (binder), etc.) is added to a polar solvent or a non-polar solvent to prepare a slurry (which may be a paste). Then, the obtained slurry is applied on the prepared negative electrode current collector 22 to form a first layer of a negative electrode active material layer. Next, a slurry (which may be a paste) having a different Ag content from that of the first layer is prepared. Thereafter, the obtained slurry is applied to the upper surface of the second layer and dried to obtain a laminate.

If the negative electrode active material layer further includes one or more layers, the additional layers may be stacked in the same manner as above.

Next, the laminate obtained is pressurized using, for example, hydrostatic pressure to manufacture the negative electrode 20. In addition, the pressurization process may be omitted. In addition, the method of applying the slurry to the negative electrode current collector 22 is not particularly limited, and for example, may be a screen-printing method, a metal mask printing method, an electrostatic coating method, a dip coating method, a spray coating method, a roll coating method, a doctor blade method, a gravure coating method, and the like.

In the above, the method of forming the negative electrode active material layer in two layers has been described, but even when an additional layer is formed, a slurry to form each layer is prepared, and each layer is sequentially stacked according to the stacking order by the method described above to manufacture a negative electrode.

(3) Solid electrolyte layer manufacturing process

The solid electrolyte layer 30 may be made of, for example, a solid electrolyte including a sulfide-based solid electrolyte material.

First, a starting material (e.g., $Li_2S$, $P_2S_5$, etc.) is treated by a melt quenching method or a mechanical milling method to obtain a sulfide-based solid electrolyte material. For example, when the melt quenching method is used, the starting materials are mixed in a predetermined amount, and obtained mixture is pelletized, reacted in a vacuum at a predetermined reaction temperature, and then quenched to prepare a sulfide-based solid electrolyte material. In addition, the reaction temperature of the mixture of $Li_2S$ and $P_2S_5$ may be 400 °C ~ 1000 °C, for example, 800 °C ~ 900 °C. In addition, the reaction time may be 0.1 hours to 12 hours, for example, 1 hour to 12 hours. In addition, the quenching temperature of the reactant may be 10 °C or less, for example, 0 °C or less, and the quenching rate may be usually 1 °C/sec to 10000 °C/sec, for example, 1 °C/sec to 1000 °C/sec.

In addition, when a mechanical milling method is used, the starting materials are stirred and reacted using a ball mill or the like to prepare a sulfide-based solid electrolyte material. In addition, the stirring speed and stirring time in the mechanical milling method are not particularly limited, but the faster the stirring speed, the faster the production rate of the sulfide-based solid electrolyte material, and the longer the stirring time, the higher the conversion rate of the raw material to the sulfide-based solid electrolyte material.

Thereafter, the obtained mixed raw material (sulfide-based solid electrolyte material) is heat-treated at a predetermined temperature, and then it is pulverized to prepare a particle-shaped solid electrolyte. If the solid electrolyte has a glass transition point, it is sometimes changed from amorphous to crystalline by heat treatment.

Next, the solid electrolyte obtained by the above method can be formed into a film using a known film forming method such as an aerosol position method, a cold spray method, or a sputtering method, for example, to prepare the solid electrolyte layer 30. Also, the solid electrolyte layer 30 may be manufactured by pressing solid electrolyte particles. In addition, the solid electrolyte layer 30 may be prepared by mixing a solid electrolyte, a solvent, and a binder, applying the mixture, and drying and pressing the same.

(4) Stacking process

The solid electrolyte layer 30 is disposed between the positive electrode 10 and the negative electrode 20, and these are pressurized using, for example, hydrostatic pressure to obtain an all-solid-state lithium-ion secondary battery 100 according to an embodiment.

The all-solid-state lithium-ion secondary battery 100 of the present invention may not need to apply a high external pressure using an end plate or the like, and may provide improved discharge capacity, even if the external pressure applied to the positive electrode 10, the negative electrode 20 and the solid electrolyte layer 30 during use is 1 MPa or less.

<Charging method of all-solid-state lithium-ion secondary battery>

Next, a charging method of the all-solid-state lithium-ion secondary battery 100 will be described.

In the charging method of the all-solid-state lithium-ion secondary battery 100 according to an embodiment, the all-solid-state lithium-ion secondary battery 100 may be charged (i.e., overcharged) in excess of the charging capacity of the negative electrode active material layer 24.

At the beginning of charging, lithium may be intercalated into the negative electrode active material layer 24. When the battery is charged beyond the charging capacity of the negative electrode active material layer 24, lithium is precipitated on the back side of the negative electrode active material layer 24, that is, between the negative electrode current collector 22 and the negative electrode active material layer 24, as shown in FIG. 4, and the metal layer 26, which was not present during manufacture, may be formed by the precipitated lithium. During discharging, lithium in the negative electrode active material layer 24 and the metal layer 26 is ionized and may migrate toward the positive electrode 10. Therefore, in the all-solid-state lithium-ion secondary battery 100 of the present invention, lithium can be used as a negative electrode active material. In addition, since the negative electrode active material layer 24 coats the metal layer 26, it can function as a protective layer of the metal layer 26 and at the same time, can suppress precipitation and growth of dendritic metal lithium. In this way, a short circuit and a decrease in capacity of the all-solid-state lithium-ion secondary battery 100 may be suppressed, and further, characteristics of the all-solid-state lithium-ion secondary battery 100 may be improved. In addition, according to one embodiment, since the metal layer 26 is not formed in advance, it is possible to reduce the manufacturing cost of the all-solid-state lithium-ion secondary battery 100.

In addition, the metal layer 26 is not limited to being formed between the negative electrode current collector 22 and the negative electrode active material layer 24, and may be formed inside the negative electrode active material layer 24, as shown in FIG. 4. In addition, the metal layer 26 may be formed both between the negative electrode current collector 22 and the negative electrode active material layer 24 and inside the negative electrode active material layer 24.

The all-solid-state lithium-ion secondary battery 100 of the present invention may be manufactured in a unit cell having a structure of positive electrode/separator/negative electrode, or a bi-cell having a structure of positive electrode/separator/negative electrode/separator/positive electrode, or in the structure of a stacked battery in which the structure of the unit cell is repeated.

The shape of the all-solid-state lithium-ion secondary battery 100 of the present invention is not particularly limited, and for example, may be exemplified as a coin type, a button type, a sheet type, a stacked type, a cylindrical shape, a flat type, a horn type, etc. In addition, it can be used in a large battery used in the electric vehicle, etc. For example, the all-solid-state lithium-ion secondary battery 100 may also be used in a hybrid vehicle such as a plug-in hybrid electric vehicle (PHEV). In addition, it can be used in fields requiring a large amount of power storage. For example, it may be used for an electric bicycle or a power tool.

Hereinafter, the present invention will be described in detail with reference to examples in order to specifically describe the present invention. However, the examples according to the present invention may be modified in various other forms, and the scope of the present invention should not be construed as being limited to the examples described below. The examples of the present invention are provided in order to more completely explain the present invention to those of ordinary skill in the art.

**Comparative Example 1: Manufacturing of negative electrode**

6 g of carbon black as an amorphous carbon material, which has a particle size (D50) of 40nm to 60nm and an oxygen content of 5.2 at%, 2 g of Ag with a particle diameter (D50) of 40nm to 60nm, 9.33 g of PVdF binder (6% solid content), and 7.67 g of NMP solution was placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for negative electrode active material.

Afterwards, the slurry was coated on SUS foil to a thickness of 60$\mu$m and dried to prepare a negative electrode.

**Example 1: Manufacturing of negative electrode**

3 g of carbon black as an amorphous carbon material, which has a particle size (D50) of 40nm to 60nm and an oxygen content of 5.2 at%, 1.33 g of Ag with a particle diameter (D50) of 40nm to 60nm, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the first negative electrode active material.

3 g of carbon black as an amorphous carbon material, which has a particle size (D50) of 40nm to 60nm and an oxygen content of 5.2 at%, 0.66 g of Ag with a particle diameter (D50) of 40nm to 60nm, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the second negative electrode active material.

Afterwards, the slurry for the first negative electrode active material was coated on SUS foil to a thickness of 30$\mu$m and dried, and then, the slurry for the second negative electrode active material was coated to a thickness of 30 $\mu$m on the upper surface of the first negative electrode active material layer formed by the coating, and dried to prepare a negative electrode.

**Example 2: Manufacturing of negative electrode**

3 g of carbon black as an amorphous carbon material, which has a particle size (D50) of 40nm to 60nm and an oxygen content of 5.2 at%, 2 g of Ag with a particle diameter (D50) of 40nm to 60nm, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the first negative electrode active material.

3 g of carbon black as an amorphous carbon material, which has a particle size (D50) of 40nm to 60nm and an oxygen content of 5.2 at%, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the second negative electrode active material.

Afterwards, the slurry for the first negative electrode active material was coated on SUS foil to a thickness of 30$\mu$m and dried, and then, the slurry for the second negative electrode active material was coated to a thickness of 30um on the upper surface of the first negative electrode active material layer formed by the coating, and dried to prepare a negative electrode.

**Example 3: Manufacturing of negative electrode**

2 g of carbon black as an amorphous carbon material, which has a particle size (D50) of 40nm to 60nm and an oxygen content of 5.2 at%, 1.33 g of Ag with a particle diameter (D50) of 40nm to 60nm, 3.11 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the first negative electrode active material.

2 g of carbon black as an amorphous carbon material, which has a particle size (D50) of 40nm to 60nm and an oxygen content of 5.2 at%, 0.66 g of Ag with a particle diameter (D50) of 40nm to 60nm, 3.11 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the second negative electrode active material.

2 g of carbon black as an amorphous carbon material, which has a particle size (D50) of 40nm to 60nm and an oxygen content of 5.2 at%, 3.11 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the third negative electrode active material.

Afterwards, the slurry for the first negative electrode active material was coated on SUS foil to a thickness of 20$\mu$m and dried, and then, the slurry for the second negative electrode active material was coated to a thickness of 20um on the upper surface of the first negative electrode active material layer formed by the coating, and dried.

Next, the slurry for the third negative electrode active material was coated to a thickness of 20 $\mu$m on the upper surface of the second negative electrode active material layer formed by the coating and dried to prepare a negative electrode.

**Example 4: Manufacturing of negative electrode**

The slurry for the first negative electrode active material prepared in Example 1 was coated on SUS foil to a thickness of 40 $\mu$m (Example 1: 30 $\mu$m) and dried, and then, a negative electrode was manufactured in the same manner as Example 1, except that the slurry for the second negative electrode active material was coated to a thickness of 20 $\mu$m (Example 1: 30 $\mu$m) on the upper surface of the first negative electrode active material layer formed by the coating, and dried.

**Example 5: Manufacturing of negative electrode**

2 g of carbon black as an amorphous carbon material, which has a particle size (D50) of 40nm to 60nm and an oxygen content of 5.2 at%, 1.33 g of Ag with a particle diameter (D50) of 40nm to 60nm, 3.11 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the first negative electrode active material.

2 g of carbon black as an amorphous carbon material, which has a particle size (D50) of 40nm to 60nm and an oxygen content of 5.2 at%, 0.66 g of Ag with a particle diameter (D50) of 40nm to 60nm, 3.11 g of PVdF binder (6% solid content), and 1.5 g of NMP solution was placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the second negative electrode active material.

2 to 5 g of Ag with a particle diameter (D50) of 40nm to 60nm, 3.11 g of PVdF binder (6% solid content), and 1.5 g of NMP solution was placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the third negative electrode active material.

Afterwards, the slurry for the third negative electrode active material was coated on SUS foil to a thickness of 10 $\mu$m and dried, and then, the slurry for the first negative electrode active material was coated to a thickness of 20 $\mu$m on the upper surface of the third coating layer, and dried, and thereafter, the slurry for the second negative electrode active material was coated to a thickness of 20 $\mu$m on the upper surface of the first negative electrode active material layer formed by the coating and dried to prepare a negative electrode.

**Example 6: Manufacturing of negative electrode**

6 g of carbon black as an amorphous carbon material, which has a particle size (D50) of 40nm to 60nm and an oxygen content of 5.2 at%, 6 g of Ag with a particle diameter (D50) of 40nm to 60nm, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the first negative electrode active material.

6 g of carbon black as an amorphous carbon material, which has a particle size (D50) of 40nm to 60nm and an oxygen content of 5.2 at%, 4.67 g of PVdF binder (6% solid content), and 1.5 g of NMP solution were placed in a Thinky mixer container and mixed 12 times at 2000 rpm for 3 minutes each. Afterwards, 5 g of NMP solution was additionally added and then mixed 5 times at 2000 rpm for 3 minutes each to prepare a slurry for the second negative electrode active material.

Afterwards, the slurry for the first negative electrode active material was coated on SUS foil to a thickness of 20 $\mu$m and dried, and then, the slurry for the second negative electrode active material was coated to a thickness of 40 $\mu$m on the upper surface of the first negative electrode active material layer formed by the coating, and dried to prepare a negative electrode.

**Manufacturing of all-solid-state lithium-ion secondary batteries of Example 7 and Comparative Example 2**

The pouch-type mono-cells of Example 7 and Comparative Example 2 were manufactured using a positive electrode, as a positive electrode, in which the positive electrode active material was loaded at 5 mAh/cm$^2$ on the current collector, the negative electrode manufactured in Example 6 and Comparative Example 1 as the negative electrode, and a sulfide-based all-solid electrolyte as the electrolyte.

**Experimental Example 1: Evaluation of characteristics of the battery**

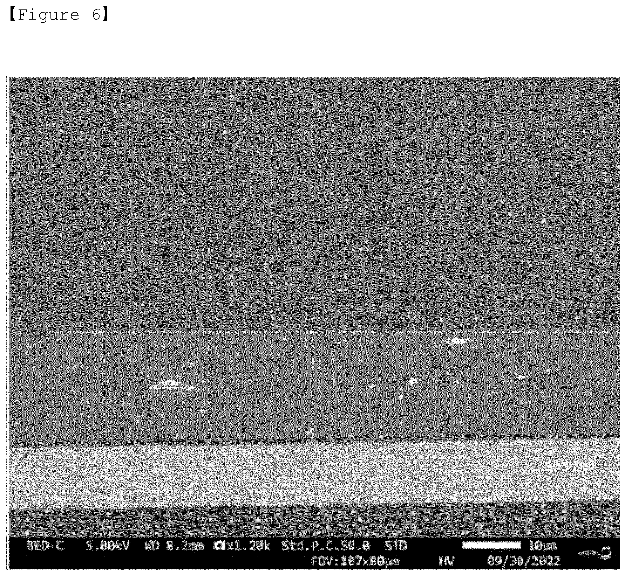

The pouch-type mono-cells of Example 7 and Comparative Example 2 were operated under the following charging and discharging conditions at an operating voltage range of 4.25V-3.0V and an operating temperature of 60°C to evaluate cycle characteristics, and the results are shown in FIG. 6.

Charging condition: 0.33C, 4.25V CC/CV, 0.1C cut-off
Discharging condition: 0.33C, 3.0V, CC

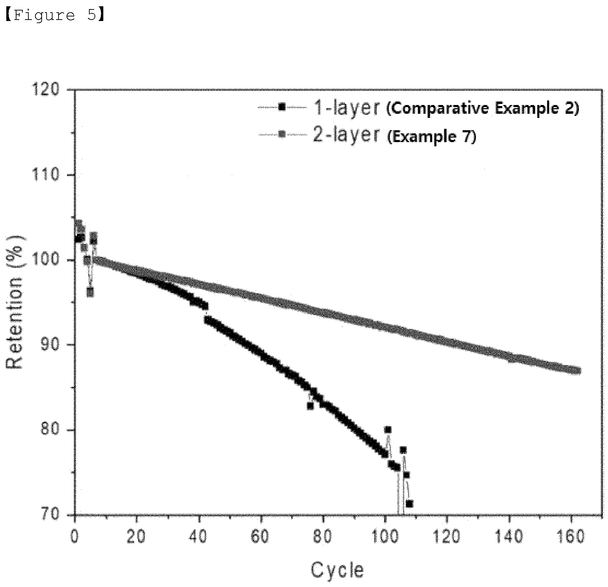

From FIG. 5, it can be seen that in the case of the battery of Example 7, it operates without significant decrease in cell capacity compared to the battery in Comparative Example 2, as the cycle progresses.

FIG. 6 shows an SEM image of the negative electrode of Example 6 above. As can be seen in FIG. 6, it can be seen that the negative electrode of Example 6 has many Ag particles arranged in the active material layer close to the current collector, and the battery of Example 7 appears to have improved cycle characteristics by including a negative electrode with this structure.

**Experimental Example 2: Measurement of particle size of carbon material-Ag composite**

(1) Separation of sample of carbon material-metal composite

Samples for analysis were prepared by taking a portion of the carbon material-metal composite contained in the slurry for the first negative electrode active material of Example 1 above, and the slurry for the negative electrode active material of Comparative Example 3, which was prepared in the same manner as the slurry for the first negative electrode active material of Example 1, except that carbon black with an oxygen content of 2.6 at% was used instead of carbon black with an oxygen content of 5.2 at%, and diluting it in the NMP solution.

(2) Analysis instrument

Particle size analysis was performed using the particle size analyzer, model name Mastersizer 3000 (Malvem panalytical). Specifically, carbon material-metal composite analysis sample 1 (Example 1, comprising carbon black having an oxygen content of 5.2 at%) and carbon material-metal composite analysis sample 2 (Comparative Example 3, comprising carbon black having an oxygen content of 2.6 at%) prepared in (1) above are placed into the sample inlet of the device so as to be 10-15% of laser obscuration, respectively, and measurement was performed.

The analyzer can analyze a particle size range of 0.01 $\mu$m to 3500 $\mu$m, and is a particle size analyzer suitable for wet and dry dispersion types through laser diffraction.

(3) Result of analysis

The result of particle size analysis of the carbon material-metal composite analysis sample 1 and sample 2 are shown in Table 1 and FIG. 6.

[Table 1]

| | D10 ($\mu$m) | D50 ($\mu$m) | D90 ($\mu$m) |
|---|---|---|---|
| Carbon material-metal composite | 0.019 | 0.261 | 0.623 |

(continued)

| | D10 (μm) | D50 (μm) | D90 (μm) |
|---|---|---|---|
| analysis sample 1 (comprising carbon black having oxygen content: 5.2 at%) | | | |
| Carbon material-metal composite analysis sample 2 (comprising carbon black having oxygen content: 2.6 at%) | 3.14 | 8.26 | 18.3 |

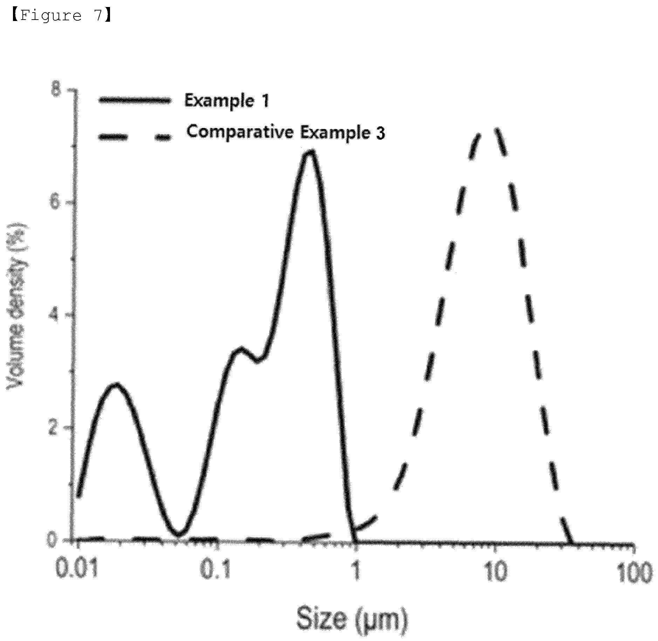

From the results of Table 1, it can be seen that the particle size of the carbon material-metal composite comprising carbon black having an oxygen content of 5.2 at% is significantly smaller than the particle size of the carbon material-metal composite comprising carbon black having an oxygen content of 2.6 at%. Also, according to the results of the analysis shown in FIG. 7, it can be seen that the maximum particle size of carbon material-metal composite comprising carbon black with oxygen content of 5.2 at% is 1 μm or less which is significantly smaller than the particle size of carbon material-metal composite comprising carbon black with oxygen content of 2.6 at%.

**Claims**

1.  An all-solid-state lithium-ion secondary battery, comprising:

    a positive electrode, a negative electrode, and a solid electrolyte interposed between the positive electrode and the negative electrode,
    wherein the negative electrode comprises a negative electrode current collector and a negative electrode active material layer, and
    wherein the negative electrode active material layer comprises a carbon material and Ag, and comprises two or more layers.

2.  The all-solid-state lithium-ion secondary battery according to claim 1, wherein the two or more layers comprise two layers containing a carbon material and Ag, and the two layers have different Ag contents.

3.  The all-solid-state lithium-ion secondary battery according to claim 2, wherein among the two layers containing the carbon material and Ag, the layer disposed adjacent to the negative electrode current collector has a higher Ag content ratio than the layer disposed adjacent to the solid electrolyte.

4.  The all-solid-state lithium-ion secondary battery according to claim 3, wherein the layer disposed adjacent to the negative electrode current collector contains 1.5 to 10 times more Ag than the layer disposed adjacent to the solid electrolyte.

5.  The all-solid-state lithium-ion secondary battery according to claim 3, wherein the two layers containing the carbon material and Ag each independently have a thickness of 1 μm to 50 μm.

6.  The all-solid-state lithium-ion secondary battery according to claim 3, further comprising, in addition to the two layers containing the carbon material and Ag, a layer containing 0 to 5% by weight of Ag and the carbon material based on a total of 100% by weight of a negative electrode active material.

7.  The all-solid-state lithium-ion secondary battery according to claim 6, wherein the layer containing 0 to 5% by weight of Ag and the carbon material is a layer that does not contain Ag.

8.  The all-solid-state lithium-ion secondary battery according to claim 6, wherein the layer containing 0 to 5% by weight of Ag and the carbon material is disposed between two layers containing the carbon material and Ag, or between a layer adjacent to a solid electrolyte among the two layers and a solid electrolyte.

9.  The all-solid-state lithium-ion secondary battery according to claim 8, wherein the layer containing 0 to 5% by weight of Ag and the carbon material is disposed between the layer adjacent to the solid electrolyte among the two layers and the solid electrolyte.

10. The all-solid-state lithium-ion secondary battery according to claim 6, wherein the layer containing 0 to 5% by weight of Ag and the carbon material has a thickness of 1 μm to 30 μm.

11. The all-solid-state lithium-ion secondary battery according to claim 3, further comprising, in addition to the two layers containing the carbon material and Ag, a layer containing 80 to 100% by weight of Ag based on a total of 100% by weight of a negative electrode active material.

12. The all-solid-state lithium-ion secondary battery according to claim 11, wherein the layer containing 80 to 100% by weight of Ag is disposed between the layer adjacent to the negative electrode current collector among the two layers and the negative electrode current collector.

13. The all-solid-state lithium-ion secondary battery according to claim 1, wherein the two or more layers comprise one layer containing the carbon material and Ag and one layer containing 0 to 5% by weight of Ag and the carbon material.

14. The all-solid-state lithium-ion secondary battery according to claim 1, wherein the positive electrode comprises a positive electrode current collector and a positive electrode active material layer.

15. The all-solid-state lithium-ion secondary battery according to claim 1, wherein the solid electrolyte is a sulfide-based solid electrolyte.

【Figure 1】

【Figure 2】

【Figure 3】

100

【Figure 4】

【Figure 5】

【Figure 6】

【Figure 7】

## INTERNATIONAL SEARCH REPORT

| International application No. |
|---|
| **PCT/KR2023/017308** |

**A.      CLASSIFICATION OF SUBJECT MATTER**

**H01M 4/36**(2006.01)i; **H01M 4/583**(2010.01)i; **H01M 4/38**(2006.01)i; **H01M 4/62**(2006.01)i; **H01M 10/052**(2010.01)i; **H01M 10/0562**(2010.01)i

According to International Patent Classification (IPC) or to both national classification and IPC

**B.      FIELDS SEARCHED**

Minimum documentation searched (classification system followed by classification symbols)

H01M 4/36(2006.01); H01M 10/052(2010.01); H01M 10/0525(2010.01); H01M 10/0562(2010.01); H01M 10/058(2010.01); H01M 10/0585(2010.01); H01M 4/04(2006.01); H01M 4/134(2010.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 리튬이온 이차전지(all-solid lithium-ion secondary battery), 음극 활물질층 (anode active material layer), 탄소(carbon), 은(silver)

**C.      DOCUMENTS CONSIDERED TO BE RELEVANT**

| Category* | Citation of document, with indication, where appropriate, of the relevant passages | Relevant to claim No. |
|---|---|---|
| X | EP 3869584 A1 (SAMSUNG ELECTRONICS CO., LTD.) 25 August 2021 (2021-08-25) See claims 1, 5 and 11-12; and paragraphs [0026], [0036]-[0037], [0046], [0048], [0060] and [0079]. | 1-5,11-15 |
| Y | | 6-10 |
| Y | KR 10-2020-0134126 A (SAMSUNG ELECTRONICS CO., LTD.) 01 December 2020 (2020-12-01) See claim 21; and paragraph [0132]. | 6-10 |
| A | US 2022-0045354 A1 (SAMSUNG ELECTRONICS CO., LTD. et al.) 10 February 2022 (2022-02-10) See entire document. | 1-15 |
| A | KR 10-2021-0113878 A (SAMSUNG ELECTRONICS CO., LTD.) 17 September 2021 (2021-09-17) See entire document. | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2024** | **08 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 576 250 A1**

**INTERNATIONAL SEARCH REPORT**

| International application No. |
|---|
| **PCT/KR2023/017308** |

| C. | DOCUMENTS CONSIDERED TO BE RELEVANT |  |
|---|---|---|
| Category* | Citation of document, with indication, where appropriate, of the relevant passages | Relevant to claim No. |
| A | CN 115084638 A (CHINA FAW GROUP CORPORATION) 20 September 2022 (2022-09-20)<br>See entire document. | 1-15 |

Form PCT/ISA/210 (second sheet) (July 2022)

27

## INTERNATIONAL SEARCH REPORT
### Information on patent family members

International application No.

**PCT/KR2023/017308**

| Patent document cited in search report | | | Publication date (day/month/year) | Patent family member(s) | | | Publication date (day/month/year) |
|---|---|---|---|---|---|---|---|
| EP | 3869584 | A1 | 25 August 2021 | US | 11777076 | B2 | 03 October 2023 |
| | | | | US | 2021-0257606 | A1 | 19 August 2021 |
| KR | 10-2020-0134126 | A | 01 December 2020 | JP | 2020-191202 | A | 26 November 2020 |
| | | | | JP | 7321769 | B2 | 07 August 2023 |
| US | 2022-0045354 | A1 | 10 February 2022 | CN | 116349026 | A | 27 June 2023 |
| | | | | EP | 4193412 | A1 | 14 June 2023 |
| | | | | WO | 2022-031009 | A1 | 10 February 2022 |
| KR | 10-2021-0113878 | A | 17 September 2021 | CN | 115244752 | A | 25 October 2022 |
| | | | | EP | 4118702 | A1 | 18 January 2023 |
| | | | | JP | 2023-517913 | A | 27 April 2023 |
| | | | | US | 11605812 | B2 | 14 March 2023 |
| | | | | US | 11742478 | B2 | 29 August 2023 |
| | | | | US | 2021-0280853 | A1 | 09 September 2021 |
| | | | | US | 2023-0055212 | A1 | 23 February 2023 |
| | | | | WO | 2021-182762 | A1 | 16 September 2021 |
| CN | 115084638 | A | 20 September 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220144772
- KR 1020230148468
- KR 1020150064697